# EUROPEAN PATENT APPLICATION

(11) **EP 4 554 196 A1**
(43) Date of publication of application: **14.05.2025**
(21) Application number: 24211040.1
(22) Date of filing: 06.11.2024
(51) Int. Cl.: H04M 1/02, H04M 1/72409, H04M 1/72412

(54) **COMMUNICATION ARRANGEMENT**

(30) Priority: 07.11.2023 FI 20236242
(71) Applicant: Haara, Juha, 90420 Oulu (FI)
(72) Inventor: Haara, Juha, 90420 Oulu (FI)
(74) Representative: Kolster Oy Ab

(57) **Abstract**

There is provided n arrangement providing access to a cellular communication network, comprising: a connection module (202) and a terminal device (102), each comprising a frame structure (300), the frame structure comprising a controller (302) and configured to provide electric and physical couplings (304, 308) to at least two attachment parts (306, 308). The attachment parts (306, 308) comprise at least one or more RF and/or optical units (318, 320) for the controller to form RF and/or optical connections, and a battery (324) providing energy. The connection module communicates (200) with the device (102), forms a wireless connection (204) with the cellular communication network and provides the device access to the cellular communication network. The attachment parts (306, 310) are installable in the frame structure of both the connection module (202) and the device (102) at a time.

## Description

### TECHNICAL FIELD

The invention relates to communications.

### BACKGROUND

Modern communication networks allow the user to access the network in different ways. For example, while moving in the countryside the terminal devices of the users may connect to macro base stations of the network. In tightly built city centers base stations may cover a smaller area and called micro base stations. Further, inside buildings, such as workplaces or homes, a so-called home or private base station may be utilized. A home base station may serve a house, a building, or an apartment.

Topics that have gained increasing attention include environmental issues and health issues related to radiation from mobile devices. Developing apparatuses and methods to decrease radiation experienced by users of terminal devices and designing economical devices which save resources are seen as important issues.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following some embodiments will be described with reference to the attached drawings, in which
Figures 1 and 2 illustrate examples of wireless communication systems,
Figure 3 illustrates an example of an apparatus of an arrangement according to an embodiment,
Figures 4A, 4B and 4C illustrate an example of a terminal device of an arrangement according to an embodiment,
Figures 5A, 5B and 5C illustrate an example of a connection module of an arrangement according to an embodiment,
Figure 6 illustrates a flow diagram according to an embodiment, and
Figure 7 illustrates an example of an apparatus according to an embodiment.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different exemplifying embodiments will be described using, as an example of an access architecture to which the embodiments may be applied, a radio access architecture based on long term evolution advanced (LTE Advanced, LTE-A), new radio (NR, 5G), or 6G without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wideband code division multiple access (WCDMA), wireless local area network (WLAN, Wi-Fi), or any combination thereof.

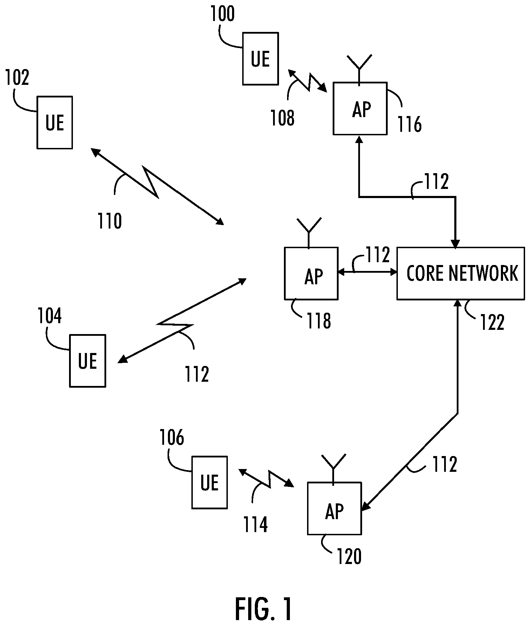

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 100, 102, 104, 106 configured to be in a wireless connection 108, 110, 112, 114 on one or more communication channels in cells served by access nodes 108, 110, 112 (such as (e/g)NodeB). The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one access points in which case the access points may also be configured to communicate with one another over links, wired or wireless, designed for the purpose. These links may be used for signalling and traffic data purposes. The access point is a computing device configured to control the radio resources of communication system it is coupled to. The access point may also be referred to as a base station, an (e/g)NodeB or any other type of interfacing device including a relay station capable of operating in a wireless environment. The access point comprises or is coupled to transceivers. From the transceivers of the access point, a connection is provided to an antenna unit that establishes bi-directional radio links to user devices. The antenna unit may comprise a plurality of antennas or antenna elements. In an embodiment, the duties of an access point are realized as units, namely a centralized unit (CU), a distributed unit (DU) and a radio unit (RU). The access point is further connected to core network 122. Depending on the system, the counterpart on the core network side can be a serving gateway (S-GW, routing and forwarding user data packets), packet data network gateway (P-GW), for providing connectivity of user devices to external packet data networks, or mobile management entity (MME), etc.

The user device 100, 102, 104,106 (also called UE, user equipment, user terminal, terminal device, etc.) illustrates one type of an apparatus to which resources on the air interface are allocated and assigned.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. The user device may also be called a subscriber unit, mobile station, remote terminal, access terminal, user terminal or user equipment (UE) just to mention but a few names or apparatuses.

Although the apparatuses have been depicted as single entities, different units, processors and/or memory units (not all shown in Figure 1) may be implemented.

5G also enables using multiple input - multiple output (MIMO) antennas, where the use of more than one antenna in communicating devices may enhance the communication quality.

The communication system is also able to communicate with other networks, such as a public switched telephone network or the Internet, or utilise services provided by them. The communication network may also be able to support the usage of cloud services, for example at least part of core network operations may be carried out as a cloud service.

In a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, pico- or femtocells. The access points of Figure 1 may provide any kind of these cells. A cellular radio system may be implemented as a multilayer network including several kinds of cells. Typically, in multilayer networks, one access node provides one kind of a cell or cells, and thus a plurality of access points are required to provide such a network structure.

For fulfilling the need for improving the deployment and performance of communication systems, the concept of "plug-and-play" access points or (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

In current wireless systems different wireless devices are not optimized for different use cases in regard of sustainable development (material efficiency) and health safety. Health issues related to radiation of mobile devices are taken into account in standards. All terminal devices in the market must fulfil given Specific Absorption Rate (SAR) regulations. Thus, the radiation power of terminal devices is limited by regulations. However, studies related to effects of radiation are still underway and there is a need to develop more safer ways of using the terminal devices.

Further, it is important that the use of communication devices is versatile, i.e., their use is not limited to any given environment or use case, but they may be utilized in different kinds of environments. As technology advances, new protocols and communication techniques are put in use. For example, NR or 5G technology has recently been introduced, but is constantly developing. Further, 6G is being standardized and expected to come onto the market in the near future. As communication systems are developed and introduced, this forces the customers to search for new devices. For example, a 4G device cannot connect to a communication network utilizing a faster 5G technique. It would be advantageous if the user could upgrade a terminal device without needing to buy a completely new device.

As a solution addressing both radiation issues and versatile device problems, an arrangement comprising a terminal device and a connection module is introduced. The connection module and the terminal device are connectable to each other in a wireless or wired manner. The connection module is configured to communicate with the terminal device, form a wireless connection with a cellular communication network and provide the terminal device access to the cellular communication network. Thus, in the proposed solution a terminal device may access the cellular communication network via the connection module and avoid direct communication link with an access point. This reduces the transmission power required from the terminal device itself. As typical use case of a terminal device accessing a communication network is that the user holds the terminal device either near the user's head or in the hand, reducing the transmission power of the terminal device decreases the radiation experienced by the user's head.

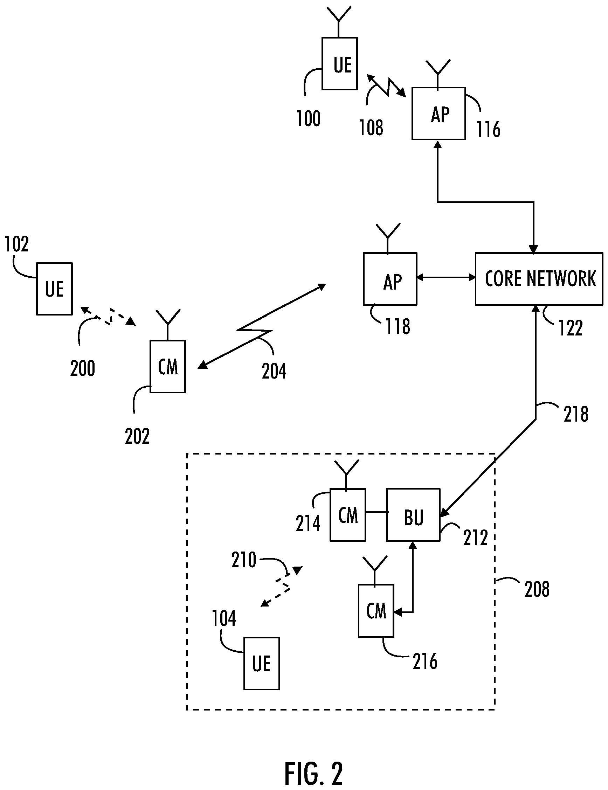

Figure 2 shows a part of an exemplifying radio access network illustrating an embodiment. Figure 2 shows user devices or terminal devices 100, 102, 104. The terminal device 100 is connected to the communication system as in Figure 1 directly via the access point 116. The terminal device 102 has a connection 200 to a communication module 202 which in turn is connected 204 to the communication system via the access point 118. Thus, the communication module 202 acts as a relay between the terminal device 102 and the access point 118, relaying uplink traffic from the terminal device to the access point and vice versa for the downlink traffic. The transmission power required from the terminal device is very small as the communication module is typically very close. The communication technology used between the terminal device and the communication module may be different than the technology used between the communication module and the cellular network. For example, the terminal device and the communication module may use Bluetooth^{™} low energy communication and the communication module and the cellular network may use 5G technology in communication.

For example, while moving outside the residence of the user, he/she may carry, in addition to the terminal device, a communication module in a purse or pocket, for example. The communication module is configured to communicate with the terminal device and provide the terminal device access to a communication network. The transmission power of the communication module may be larger than the transmission power of the terminal device but as it is located away from the user's head the radiation levels provide no danger to the user.

An example of a situation at residence 208 of the user is described later below.

In an embodiment, both the terminal device and the connection module have a modular structure, where both the connection module and a terminal device each comprise a frame structure, the frame structure comprising a controller or a control circuitry. The frame structure is configured to provide electric and physical couplings to at least two attachment parts, the at least two attachment parts comprising a first and a second attachment part.

The first attachment part comprises at least one or more radio frequency, RF, units for the controller to form radio frequency connections. Examples of possible RF-units comprise UMTS, LTE-A, 5G, 6G, Bluetooth^{™}, Bluetooth^{™} low energy, Wireless local area network (WLAN, Wi-Fi), Ultra-wideband UWB, to name a few.

The second attachment part comprises at least a battery providing energy to the frame structure and the attachment parts.

The same types of attachment parts may be installed in both the connection module and the terminal device at a time. Thus, the same attachment parts may be used in both the connection module and the terminal device. This provides many advantages. For example, assume that the user has a terminal device and a connection module both equipped with a 5G- supporting attachment part. The user might use the 5G capacity of the terminal device when connection module is not carried along. Now a 5G-supporting attachment part with enhanced features comes to market. The user might buy such an attachment part to be installed to the connection module. If the 5G-supporting attachment part of the terminal device becomes faulty, the user may easily install the attachment part formerly used in the communication module to the terminal device. Further, if the user wishes to move using 6G-communication, there is no need to exchange the whole device but changing an attachment part is sufficient. In addition, if the battery loses its capacity, it is sufficient to exchange the attachment part comprising the battery or attach the connection module to the terminal device to provided power to the device .

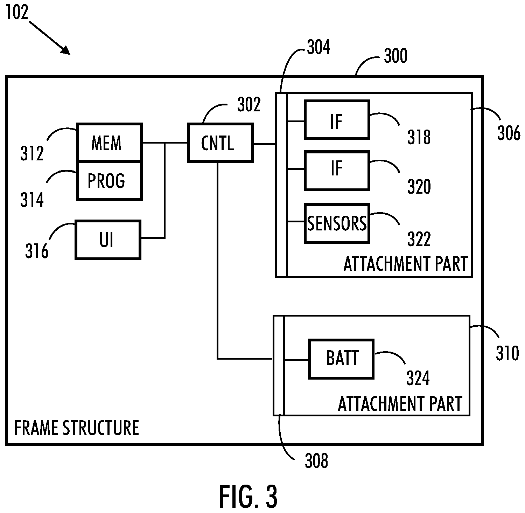

Figure 3 illustrates an example of an apparatus of an arrangement according to an embodiment. The apparatus illustrated in Figure 3 may be a terminal device 100 or a connection module.

The apparatus of Figure 3 comprises a frame structure 300. The frame structure 300 comprises a controller or a control circuitry 302 such as at least one processor. In an embodiment, the frame structure also comprises at least one memory 312 including a computer program code (software) 314, wherein the at least one memory and the computer program code (software) 314, are configured, with the at least one processor, to cause the controller and apparatus to carry out any operations described above and below. The memory 312 may be implemented using any suitable data storage technology,

The apparatus of Figure 3 further comprises electric and physical couplings 304, 308 to at least two attachment parts, the at least two attachment parts comprising a first 306 and a second 308 attachment part. In an embodiment, the electric and physical couplings 304, 308 connect the attachment parts to the frame structure in such a manner, that the controller may see the components of the attachment parts as integral parts of the apparatus. The couplings further attach the attachment parts to the frame structure in such a manner that they do not accidentally separate from the frame structure. However, attaching the attachment parts to the frame structure does not need any special hardware or service, but they can be attached to the frame structure by the user of the apparatus, for example by screws and a screwdriver. The attachment parts may also be located behind the cover of the frame structure. The attachment parts may be located at different sides of the frame structure.

The first attachment part 306 comprises at least one or more radio frequency units 318, 320 for the controller 302 to form radio frequency connections. The attachment part may also comprise optical components such as infrared components.

The second attachment part 310 comprises at least a battery 324 providing energy to the frame structure 300 and the at least two attachment parts 306, 310.

The frame structure and both the first and a second attachment part may naturally comprise also other components. In an embodiment, the frame structure may comprise a user interface 316 with a touch sensitive display, a camera, microphone and one or more speakers, for example. In an embodiment, the first (or second) attachment part may further comprise one or more sensors 322, and the controller 302 may be configured to perform measurements utilizing the sensors. Examples of the sensors include accelerometer, temperature, gyroscope, heart rate, to name a few.

In an embodiment, the first attachment part may further comprise, in addition to RF transceivers, other communication interfaces like an optical transceiver, such as an infrared transceiver. The terminal device may utilize the optical transceiver alone or in connection with RF transceiver when communicating with the connection module or other devices. The first attachment part may further be configured to connect to various accessories, such as a smartwatch and virtual reality glasses, for example.

The components may also be located in other attachment parts than listed above. For example, components of the user interface may be located also in an attachment part. Further, memory usable by the controller of the terminal device may be located at least in part in an attachment part. If the user changes the attachment parts attached to the frame structure, the properties of the terminal device and how the user may use the terminal device may change.

In an embodiment, there may be first attachment parts with different properties available. For example, a first attachment part of a given type may comprise RF-parts capable of communicating with a cellular communication network. A first attachment part of another type may comprise only wireless local area and Bluetooth^{™} transceivers. A terminal device with this kind of first attachment part could be used only in a residential setting and also where the connection module would provide further connections.

The frame structure may also comprise one or more antennas (not shown in the Figures). In an embodiment, the antennas may be located in the same attachment part as RF-components.

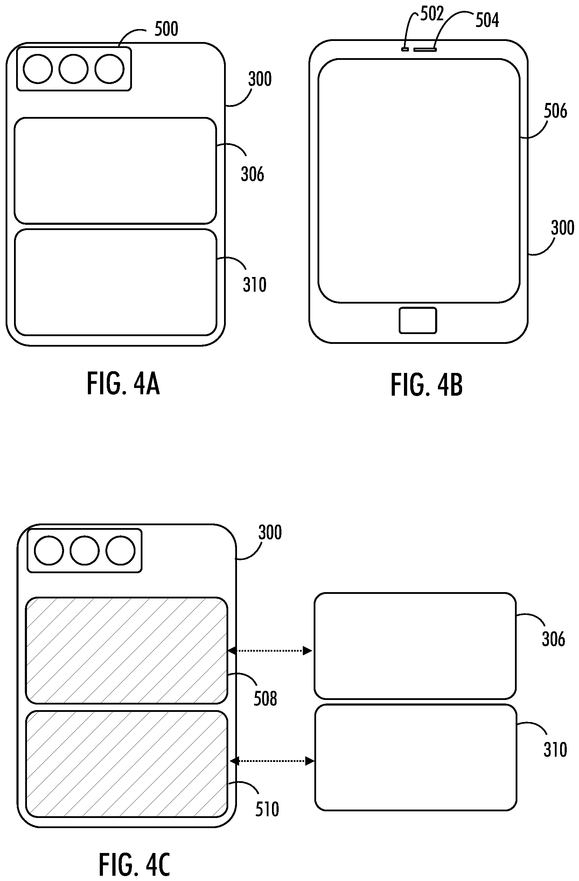

Figures 4A, 4B and 4C illustrate an example of a terminal device according to an embodiment. Figure 4A illustrates an example of a backside view of the terminal device. The terminal device comprises a frame structure 300. The first 306 and second 310 attachment parts are placed in the frame structure and are operational. The frame structure in this example further comprises camera unit and lenses 500 are visible.

Figure 4B illustrates an example of a frontside view of the terminal device. The frame structure 300 comprises a speaker 502 and a camera unit 504 and a touch sensitive display 506.

Figure 4C illustrates another example of a backside view of the terminal device. In this example, the first 306 and second 310 attachment parts are separated from the frame structure 300. The locations 508, 510 reserved for the attachment parts are empty.

It is to be noted that Figures 4A, 4B and 4C disclose merely one possible example of the structure of the terminal device. The attachment parts may also be located on the front side or side of the frame structure. The number of attachment parts may also be other than two.

Let us return to the example illustrated by Figure 2. In an embodiment, the arrangement providing access to a cellular communication network, comprises a base unit configured be in connection with the cellular communication network; the connection module being connectable to the base unit. The connection module may be configured to communicate wirelessly with the terminal device, form a wireless connection with the cellular communication network and provide the terminal device access to the cellular communication network while being separate from the base unit. The base unit may be configured to communicate wirelessly with the terminal device via the connection module when the connection module is connected to the base unit and provide the terminal device access to the cellular communication network.

In an embodiment, the connection module is configured to, via the first attachment part, connect the connection module to an access point of the cellular communication network, connect the connection module to a terminal device, and connect the connection module to the base unit.

In an embodiment, the terminal device 104 is located in a residential setting 208, for example in the home of the user of the terminal device. The terminal device may access 210 the communication system via the base unit 212 located at the residential setting. There may be one or more communication modules 214, 216 connected to the base unit and the terminal device 104 communicates with the base unit 212 via the communication modules. The base unit is connected 218 to the core network 122 of the communication system in a wired or wireless manner, acting thus as a Home (e/g)NodeB (H(e/g)nodeBs) or a home node B gateway.

The communication modules and the base unit may support different wireless communication methods. The modules and base unit may be connected utilizing various RF communication methods or optical methods, such as infrared communication, for example. The communication method utilized from a communication module to the base unit may be different than what is utilized in the opposite direction. For example, a communication module to the base unit may transmit to the base unit utilizing RF and the base unit may transmit to the communication unit utilizing optical communication. The RF connection may utilize Bluetooth^{™}, Wireless local area network (WLAN, WiFi), Ultra-wideband UWB, or any other communication standard.

In an embodiment, as the communication modules and the base unit may communicate with each other in a wireless manner, the location of the communication modules may be different than the location if the base unit. For example, the communication modules may be placed in different rooms than the base unit, thus forming a mesh network. Thus, the coverage area provided by the base unit and communication modules is located may be improved.

Thus, the base unit together with the communication modules acts as a relay between the terminal device 104 and the core network 122, relaying uplink traffic from the terminal device to the core network and vice versa for the downlink traffic. The transmission power required from the terminal device is very small as the communication modules are very close.

When the user is at a residential setting, the terminal device may communicate with the base unit to which one or more communication modules are installed. Thus, the communication modules may be utilized both at the move and at home.

In an embodiment, the base unit is configured to utilize the radio frequency, RF, parts of the communication modules when communicating with the terminal device. The base unit does not necessarily need RF parts of its own. In an embodiment, the base unit may comprise additional RF parts to increase the coverage and/or capacity of the residential cell provided by the base unit. The RF parts may further comprise an RF combiner, which can combine more than one TX signal to an antenna, a multicoupler enabling multiple RF receivers to use the same antenna, a duplexer, for example.

The communication modules 214, 216 connected to the base unit 212 are removable from the base unit and when the user of the terminal device 104 leaves the residential setting 208, he/she may take one of the communication modules with him/her and thus the communication module may provide the terminal device 104 access to the communication network.

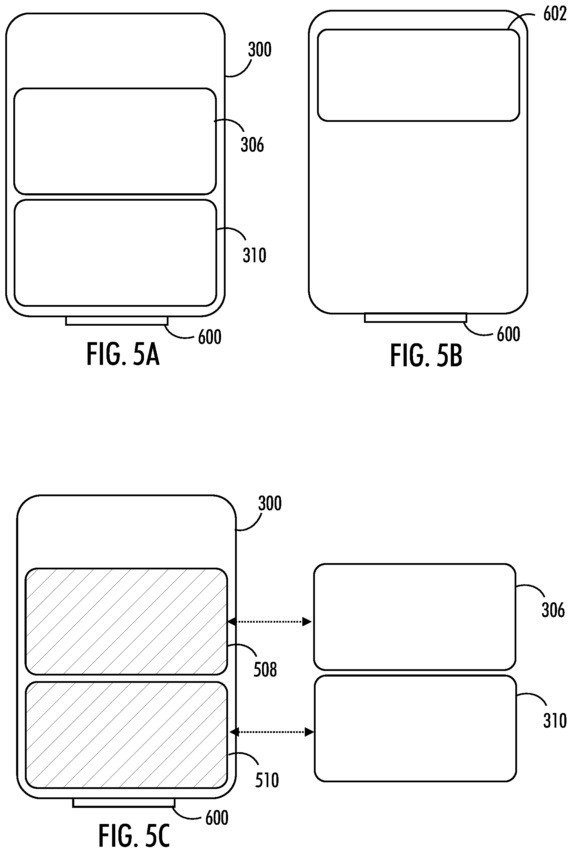

Figures 5A, 5B and 5C illustrate an example of a communication module 300 according to an embodiment. Figure 3A illustrates an example of a backside view of the communication module. The communication module comprises a frame structure 300. The first 306 and second 310 attachment parts are placed in the frame structure and are operational. The attachment parts are similar or the same to the attachment parts which can be used in the terminal device. The communication module may also comprise an interface 600 with which it can be connected to a base unit. The attachment parts may be located on top of each other or in any other suitable manner. Figures 5A and 5C are merely an illustrative example.

Figure 5B illustrates an example of a frontside view of the communication module. In some embodiments, the frame structure 300 may in this case also comprise a display 602.

Figure 5C illustrates another example of a backside view of the communication module. As with the example of Figure 4C, in this example, the first 306 and second 310 attachment parts are separated from the frame structure 300. The locations 508, 510 reserved for the attachment parts are empty.

The connection module may also comprise a clip (not shown) with which the module may be attached to user's a belt, for example.

It is to be noted that Figures 5A, 5B and 5C disclose merely one possible example of the structure of the communication module. The attachment parts may also be located on the front side or side of the frame structure. The number of attachment parts may also be other than two.

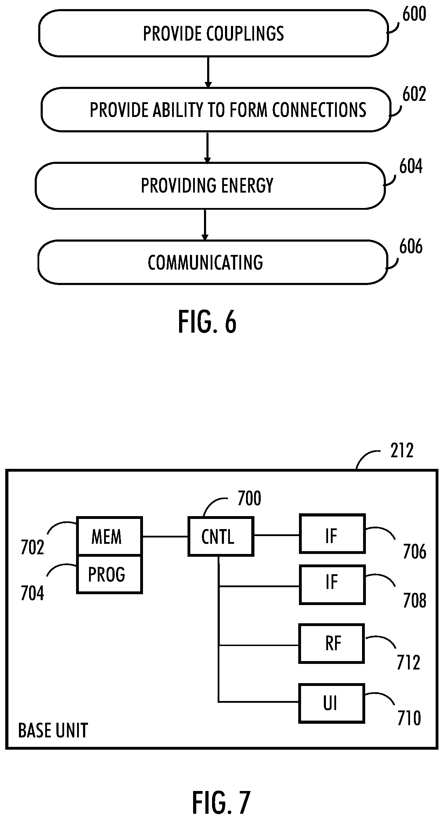

Figure 6 illustrates a flow chart according to an embodiment. The flowchart illustrates an example of providing a terminal device an access to a cellular communication network by an arrangement comprising a connection module and a terminal device. The connection module and the terminal device are connectable to each other in a wireless or wired manner. The connection module and terminal device each comprise a frame structure comprising a controller.

In step 600, the frame structure of the connection module and the terminal device provides electric and physical couplings to at least two attachment parts, the at least two attachment parts comprising a first and a second attachment part.

In step 602, the first attachment part provides to the controller of the frame structure the ability to form radio frequency and/or optical connections via at least one or more radio frequency and/or optical units of the first attachment part.

In step 604, the second attachment part provides operation energy to the frame structure and the at least two attachment parts via a battery of the second attachment part.

In step 606, the connection module communicates with the terminal device to form a wireless connection with the cellular communication network and provides the terminal device access to the cellular communication network via an access point of the cellular communication network, the at least two attachment parts being installable and removable into and from the frame structure of both the connection module and the terminal device at a time.

Figure 7 illustrates an example of a base unit 212. The base unit 312 comprises a control circuitry (CNTL) 700, such as at least one processor, and at least one memory 702 including a computer program code (software) 704, wherein the at least one memory and the computer program code (software) 704, are configured, with the at least one processor, to cause the connection module to carry out any one of the base unit embodiments described above.

The memory 702 may be implemented using any suitable data storage technology, such as semiconductor-based memory devices, flash memory, magnetic memory devices and systems, optical memory devices and systems, fixed memory, and removable memory.

The base unit 212 further comprises a first interface 706 to operatively connect the base unit to core network of the cellular communication network. In an embodiment, the interface may provide a wired or wireless connection between the base unit and the core network. The interface provides the base unit with access to the communication network. In an embodiment, the base unit, connected to one or more communication modules, may act as a home base station or Home (e/g)NodeB (H(e/g)nodeBs) or a home node B gateway. The interface enables traffic and signaling between the base unit and the communication network. If the first interface provides a wireless connection, it may comprise an RF, transceiver or interface comprising hardware and/or software for realizing communication connectivity according to one or more communication protocols.

The base unit 712 further comprises a second interface 708 to operatively connect the base unit to the one or more connection modules. In an embodiment, the interface may provide a wired or wireless connection between the base unit and the core network. In an embodiment, a wired connection between the connection module and the base unit enables the base unit to change the connection module connected to it. In an embodiment, there may be more than one first and second interfaces.

The base unit is configured to utilize the RF components of the one or more connection modules when creating a cell for serving terminal devices. The terminal devices having a need to access the communication network can connect to the base unit via the one or more connection modules connected to the base unit.

In an embodiment, the base unit comprises a chassis where the chassis comprises slots to which one or more connection modules may be placed. In an embodiment, the slots position the one or more connection modules in such a manner that the radiation patterns of the antennas of the connection modules are pointing in different direction. This enhances the coverage area or service area of the base unit. Further, the base unit may be configured to form a sectorized cell when one or more connection modules are connected to the base unit, the number of sectors being equal or less than the number of connected connection modules. Further, the base unit may be configured to utilize antennas of the one or more communication units as Multiple Input Multiple Output antennas in communication with the terminal device when one or more connection modules are connected to the base unit.

In an embodiment, both the base unit and the connection modules may provide an omnidirectional radiation pattern. In an embodiment, the chassis for the one or more connection modules may comprise directional antennas for the connection modules placed in the chassis so that the base unit and connected connection modules may form an omnidirectional cell and as many directional cells as there are connected connection modules.

The base unit may further comprise user interface 710 comprising, for example, at least one keypad, a microphone, a touch display, a display, a speaker, etc. The user interface 710 may be used to control the operation of the base unit.

In an embodiment, the base unit may further comprise an interface 712 to enhance the coverage area provided by the base unit with the one or more connection modules. The interface may comprise RF transceiver and/or standard well-known components such as an amplifier, filter, frequency-converter, (de)modulator, and encoder/decoder circuitries and one or more antennas.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described above may be carried out by a module and/or unit comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments described above.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments described above.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out at least in part in the form of a computer process defined by a computer program or portions thereof. Embodiments of the methods described above may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An arrangement providing access to a cellular communication network, comprising:
a connection module (202) and a terminal device (102), the connection module and the terminal device being connectable to each other in a wireless or wired manner,
the connection module and terminal device each comprising a frame structure (300), the frame structure comprising a controller (302) and configured to provide electric and physical couplings (304, 308) to at least two attachment parts, the at least two attachment parts comprising a first (306) and a second (310) attachment part,
the first attachment part (306) comprising at least one or more radio frequency and/or optical units (318, 320) for the controller to form radio frequency and/or optical connections,
the second attachment part (310) comprising at least a battery (324) providing energy to the frame structure and the at least two attachment parts,
the connection module (202) configured to communicate (200) with the terminal device (102), form a wireless connection (204) with the cellular communication network and provide the terminal device access to the cellular communication network via an access point of the cellular communication network,
the at least two attachment parts (306, 310) being installable and removable in and from the frame structure of both the connection module (202) and the terminal device (102) at a time.

2. The arrangement of claim 1, wherein the first attachment part comprises at least one of a radio frequency transceiver capable of communicating with a cellular communication network, a wireless local area network transceiver, a Bluetooth^{™} transceiver.

3. The arrangement of claim 1 or 2, wherein the frame structure of the terminal device comprises a user interface with at least a touch sensitive display, a camera, microphone and one or more speakers.

4. The arrangement of any preceding claim, wherein an attachment part of the at least two attachment parts further comprises one or more sensors, and the controller is configured to perform measurements utilizing the sensors.

5. The arrangement of any preceding claim, wherein the first attachment part further comprises an optical transceiver.

6. The arrangement of any preceding claim, wherein the controller of the frame structure of the terminal device is configured to detect that the energy state of the battery in the second attachment part of the terminal device is below a given threshold and control the connection module to charge the battery if the connection module is connected to the terminal device.

7. The arrangement of any preceding claim 1 to 5, wherein the controller of the frame structure of the connection module is configured to detect that the energy state of the battery in the second attachment part of the connection module is below a given threshold and control the terminal device to charge the battery if the connection module is connected to the terminal device.

8. The arrangement of any preceding claim, further comprising
a base unit configured be in connection with the cellular communication network; the connection module being connectable to the base unit;
the connection module being configured to communicate wirelessly with the terminal device, form a wireless connection with the cellular communication network and provide the terminal device access to the cellular communication network while being separate from the base unit;
the base unit configured to communicate wirelessly with the terminal device via the connection module when the connection module is connected to the base unit and provide the terminal device access to the cellular communication network.

9. The arrangement of claim 8, wherein the connection module is configured to, via the first attachment part, connect the connection module to an access point of the cellular communication network, connect the connection module to a terminal device, and connect the connection module to the base unit.

10. A method of providing access to a cellular communication network by an arrangement comprising a connection module and a terminal device; the connection module and the terminal device being connectable to each other in a wireless or wired manner, the connection module and terminal device each comprising a frame structure comprising a controller, the method comprising
providing (600) by the frame structure of the connection module and the terminal device electric and physical couplings to at least two attachment parts, the at least two attachment parts comprising a first and a second attachment part,
providing (602), by the first attachment part, to the controller of the frame structure the ability to form radio frequency and/or optical connections via at least one or more radio frequency and/or optical units of the first attachment part,
providing (604), by the second attachment part, operation energy to the frame structure and the at least two attachment parts via a battery of the second attachment part,
communicating (606) by the connection module with the terminal device, to form a wireless connection with the cellular communication network and providing the terminal device access to the cellular communication network via an access point of the cellular communication network,
the at least two attachment parts being installable and removable in and from the frame structure of both the connection module and the terminal device at a time.

11. The method of claim 10, further comprising:
performing measurements by the controller utilizing one or more sensors of the first attachment part.

12. The method of claim 10, further comprising:
providing a user interface by at least a touch sensitive display, a camera, microphone and one or more speakers the frame structure of the terminal device.
